# EUROPEAN PATENT APPLICATION

(11) **EP 4 622 206 A1**
(43) Date of publication of application: **24.09.2025**
(21) Application number: 22966697.9
(22) Date of filing: 28.11.2022
(51) Int. Cl.: H04L 41/0803, G06N 20/00

(54) **MODEL TRAINING METHOD, SERVER, AND CLIENT DEVICE**

(71) Applicant: Huawei Technologies Co., Ltd., Shenzhen, Guangdong 518129 (CN)
(72) Inventor: HUANGFU, Yourui, Shenzhen, Guangdong 518129 (CN); WANG, Jian, Shenzhen, Guangdong 518129 (CN); LI, Rong, Shenzhen, Guangdong 518129 (CN)
(74) Representative: Gill Jennings & Every LLP
(86) International application number: PCT/CN2022/134690
(87) International publication number: WO 2024/113092

(57) **Abstract**

This application provides a model training method, a server, and a client device, to improve stability of a global shared model obtained through fusion in a federated multi-task learning scenario. In the federated multi-task learning scenario, a plurality of client devices train models for a plurality of related tasks. The method includes: Client devices measure locally trained models to obtain model measurement information, and report the model measurement information to a server; the server obtains, based on the model measurement information corresponding to the plurality of models, first indication information corresponding to each model, where the first indication information indicates a training strategy for a client device to train the model; and the server sends the first indication information corresponding to each model to the client device that trains the model. In this way, the client devices adjust, based on the first indication information, the training strategies for training the models, to coordinate training progresses of the plurality of models.

## Description

### TECHNICAL FIELD

This application relates to the field of artificial intelligence technologies, and in particular, to a model training method, a server, and a client device.

### BACKGROUND

In a federated multi-task learning scenario, a plurality of clients upload weight parameters of some or all models to a server based on local tasks. After completing model fusion, the server delivers a global model obtained through fusion to the clients, and the clients each replace a part or all of a corresponding local model with the global model.

In the federated multi-task learning scenario, models for different tasks usually have different training difficulty and training duration, and performance of the models for the plurality of tasks is not synchronized. As a result, performance of a global model obtained through fusion is unstable.

### SUMMARY

This application provides a model training method, a server, and a client device, to manage a training progress of each model in federated multi-task learning, to obtain a more stable global shared model.

According to a first aspect, this application provides a model training method. The method is applicable to a federated multi-task learning system. The federated multi-task learning system includes a plurality of client devices and a server. The plurality of client devices jointly train models corresponding to a plurality of related tasks. In other words, each model includes a shared model, shared models in the plurality of models are the same, and the shared models in the plurality of models may share knowledge through federated learning. Each client device may locally train at least one of the plurality of models. The method includes: The server obtains model measurement information corresponding to the plurality of models, where the model measurement information of each model is sent to the server after the plurality of client devices measure the locally trained models; the server obtains, based on the model measurement information corresponding to the plurality of models, first indication information corresponding to each model, where the first indication information indicates a training strategy for the model; and the server sends the first indication information corresponding to each model to a client device that trains the model. The model measurement information is obtained by measuring the plurality of models, so that the server obtains the first indication information indicating the training strategy for each model based on the model measurement information, to coordinate training progresses of the plurality of models, so that performance of a global model obtained through fusion changes more smoothly and more stably.

In a possible implementation, that the server obtains, based on the model measurement information corresponding to the plurality of models, first indication information corresponding to each model includes: The server obtains, based on the model measurement information corresponding to the plurality of models, a model performance improvement amount corresponding to each model; and the server determines, based on the model performance improvement amount corresponding to each model, the first indication information corresponding to each model. The server can infer a training progress of each model based on the model performance improvement amount, so that the training strategy for each model can be accurately determined.

In a possible implementation, the training strategy includes stopping training, restarting training, increasing a training speed, or decreasing a training speed. Therefore, the client device can adjust, based on the first indication information from the server, the training strategy for the client device to train the model. In this way, a training speed of a model with a relatively low training progress can be increased, and a training speed of a model with a relatively fast training progress can be decreased, so that the training progresses of the models are kept consistent as much as possible.

In a possible implementation, each model includes a shared model, the shared model is a same model in the plurality of models, and the first indication information further indicates the shared model to upload a model upload parameter of the server. The model upload parameter may include an upload periodicity of the shared model, a model upload compression rate, and the like. The upload periodicity of the shared model can also affect the training progress of the model. For example, a short upload periodicity of the shared model can help increase a training speed of the model to some extent, and a long upload periodicity of the shared model can help decrease a training speed of the model to some extent.

In a possible implementation, the model measurement information includes at least one of the model performance improvement amount, a model loss value, precision, communication overheads, a latency, and energy efficiency. The model measurement information can accurately reflect a performance status and the training progress of the model, so that the first indication information can be accurately determined for each model, and precise management of a life cycle of the model can be implemented.

In a possible implementation, the method further includes: The server sends second indication information to the plurality of client devices, where the second indication information indicates the plurality of client devices to measure the locally trained models, to obtain the model measurement information. The server sends, to each client device, the second indication information indicating to perform model measurement, so that the server can obtain the model measurement information of each model, and manage the life cycle of each model based on the model measurement information.

In a possible implementation, the second indication information includes at least one of an identifier of the model, a model measurement periodicity, a model measurement information reporting condition, a model measurement information reporting periodicity, and a measurement indicator.

In a possible implementation, each model includes the shared model, and the shared model is the same model in the plurality of models. The method further includes: The server receives shared models that correspond to the plurality of models and that are uploaded by the plurality of client devices; the server fuses, based on a weight corresponding to each model, the shared models corresponding to the plurality of models, to obtain a global shared model, where the weight corresponding to each model is obtained based on the model measurement information corresponding to the plurality of models; and the server sends the global shared model to the plurality of client devices. A weight of the global shared model obtained through fusion is determined by using the model measurement information, so that the life cycle of the model can be managed based on the weight of a contribution of the shared model in each model to the global shared model while model performance balancing is ensured.

According to a second aspect, this application provides a model training method. The method includes: A client device obtains first indication information from a server, where the first indication information is obtained based on model measurement information corresponding to a plurality of models, the plurality of models are models corresponding to a plurality of associated tasks, the plurality of models include a model locally trained by the client device, and the model measurement information is sent to the server after a plurality of client devices measure the locally trained models; and the client device adjusts, based on the first indication information, a training strategy for the client device to train the model.

In a possible implementation, the training strategy includes stopping training, restarting training, increasing a training speed, or decreasing a training speed.

In a possible implementation, each model includes a shared model, the shared model is a same model in the plurality of models, and the first indication information further indicates the shared model to upload a model upload parameter of the server.

In a possible implementation, the model measurement information includes at least one of a model performance improvement amount, a model loss value, precision, communication overheads, a latency, and energy efficiency.

In a possible implementation, the method further includes: The client device obtains second indication information from the server; the client device measures, based on the second indication information, the model trained by the client device, to obtain model measurement information; and the client device sends the model measurement information to the server.

In a possible implementation, the second indication information includes at least one of an identifier of the model, a model measurement periodicity, a model measurement information reporting condition, a model measurement information reporting periodicity, and a measurement indicator.

According to a third aspect, this application provides a server. The server includes a processing module and a transceiver module. The processing module is configured to obtain model measurement information corresponding to a plurality of models, where the plurality of models are models corresponding to a plurality of related tasks, the plurality of models are models locally trained by a plurality of client devices, and the model measurement information is sent to the server after the plurality of client devices measure the locally trained models. The processing module is configured to obtain, based on the model measurement information corresponding to the plurality of models, first indication information corresponding to each model, where the first indication information indicates a training strategy for the model. The transceiver module is configured to send the first indication information corresponding to each model to a client device that trains the model.

In a possible implementation, the processing module is configured to obtain, based on the model measurement information corresponding to the plurality of models, a model performance improvement amount corresponding to each model. The processing module determines, based on the model performance improvement amount corresponding to each model, the first indication information corresponding to each model.

In a possible implementation, the training strategy includes stopping training, restarting training, increasing a training speed, or decreasing a training speed.

In a possible implementation, each model includes a shared model, the shared model is a same model in the plurality of models, and the first indication information further indicates the shared model to upload a model upload parameter of the server. The model upload parameter may include an upload periodicity of the shared model, a model upload compression rate, and the like.

In a possible implementation, the model measurement information includes at least one of the model performance improvement amount, a model loss value, precision, communication overheads, a latency, and energy efficiency.

In a possible implementation, the transceiver module is configured to send second indication information to the plurality of client devices, where the second indication information indicates the plurality of client devices to measure the locally trained models, to obtain the model measurement information.

In a possible implementation, the second indication information includes at least one of an identifier of the model, a model measurement periodicity, a model measurement information reporting condition, a model measurement information reporting periodicity, and a measurement indicator.

In a possible implementation, each model includes the shared model, the shared model is the same model in the plurality of models, and the transceiver module is configured to receive shared models that correspond to the plurality of models and that are uploaded by the plurality of client devices. The processing module is configured to fuse, based on a weight corresponding to each model, the shared models corresponding to the plurality of models, to obtain a global shared model, where the weight corresponding to each model is obtained based on the model measurement information corresponding to the plurality of models. The transceiver module is configured to send the global shared model to the plurality of client devices.

According to a fourth aspect, this application provides a client device. The client device includes a processing module. The processing module is configured to obtain first indication information from a server, where the first indication information is obtained based on model measurement information corresponding to a plurality of models, the plurality of models are models corresponding to a plurality of associated tasks, the plurality of models include a model locally trained by the client device, and the model measurement information is sent to the server after a plurality of client devices measure the locally trained models; and the processing module is configured to adjust, based on the first indication information, a training strategy for the client device to train the model.

In a possible implementation, the training strategy includes stopping training, restarting training, increasing a training speed, or decreasing a training speed.

In a possible implementation, each model includes a shared model, the shared model is a same model in the plurality of models, and the first indication information further indicates the shared model to upload a model upload parameter of the server.

In a possible implementation, the model measurement information includes at least one of a model performance improvement amount, a model loss value, precision, communication overheads, a latency, and energy efficiency.

In a possible implementation, the client device further includes a transceiver module. The processing module is configured to obtain second indication information from the server. The client device measures, based on the second indication information, the model trained by the client device, to obtain model measurement information. The transceiver module is configured to send the model measurement information to the server.

In a possible implementation, the second indication information includes at least one of an identifier of the model, a model measurement periodicity, a model measurement information reporting condition, a model measurement information reporting periodicity, and a measurement indicator.

According to a fifth aspect, this application provides a model training system. The system includes a server and a plurality of client devices. The plurality of client devices train models corresponding to a plurality of related tasks, and the plurality of models are models locally trained by the plurality of client devices. The plurality of client devices are respectively configured to send model measurement information of the locally trained models to the server. The server is configured to obtain, based on model measurement information corresponding to the plurality of models, first indication information corresponding to each model, where the first indication information indicates a training strategy for the model. The server is configured to send the first indication information corresponding to each model to a client device that trains the model. The plurality of client devices are respectively configured to adjust, based on the first indication information, training strategies for the client devices to train the models.

In a possible implementation, the server is specifically configured to obtain, based on the model measurement information corresponding to the plurality of models, a model performance improvement amount corresponding to each model; and the server is specifically configured to determine, based on the model performance improvement amount corresponding to each model, the first indication information corresponding to each model.

In a possible implementation, the training strategy includes stopping training, restarting training, increasing a training speed, or decreasing a training speed.

In a possible implementation, each model includes a shared model, the shared model is a same model in the plurality of models, and the first indication information further indicates the shared model to upload a model upload parameter of the server.

In a possible implementation, the model measurement information includes at least one of the model performance improvement amount, a model loss value, precision, communication overheads, a latency, and energy efficiency.

In a possible implementation, the server is further configured to send second indication information to the plurality of client devices, where the second indication information indicates the plurality of client devices to measure the locally trained models, to obtain the model measurement information.

In a possible implementation, the client device is configured to obtain the second indication information from the server; the client device measures, based on the second indication information, the model trained by the client device, to obtain the model measurement information; and the client device is configured to send the model measurement information to the server.

In a possible implementation, the second indication information includes at least one of an identifier of the model, a model measurement periodicity, a model measurement information reporting condition, a model measurement information reporting periodicity, and a measurement indicator.

In a possible implementation, each model includes the shared model, and the shared model is the same model in the plurality of models. The method further includes: The server is configured to receive shared models that correspond to the plurality of models and that are uploaded by the plurality of client devices; the server is configured to fuse, based on a weight corresponding to each model, the shared models corresponding to the plurality of models, to obtain a global shared model, where the weight corresponding to each model is obtained based on the model measurement information corresponding to the plurality of models; and the server is configured to send the global shared model to the plurality of client devices. The client device is configured to replace the shared model in the local model with the global shared model.

According to a sixth aspect, this application provides a server. The server includes a processor and a communication interface. The communication interface is configured to communicate with a plurality of client devices. The processor is configured to run a group of instructions to perform the model training method according to any one of the first aspect or the possible implementations of the first aspect.

According to a seventh aspect, this application provides a client device. The client device includes a processor and a communication interface. The communication interface is configured to communicate with a server. The processor is configured to run a group of instructions to perform the model training method according to any one of the second aspect or the possible implementations of the second aspect.

According to an eighth aspect of this application, this application provides a computer-readable storage medium. The computer-readable storage medium includes instructions. When the computer-readable storage medium is run on a computer, the computer is enabled to perform the model training method according to any one of the first aspect or the possible implementations of the first aspect, or any one of the second aspect or the possible implementations of the second aspect.

### BRIEF DESCRIPTION OF DRAWINGS

FIG. 1 is a diagram of an architecture of a federated learning system according to this application;
FIG. 2 is a diagram of a life cycle of a model according to this application;
FIG. 3 is a diagram of a life cycle of a federated multi-task model according to this application;
FIG. 4 is a diagram of an architecture of a model training system according to this application;
FIG. 5 is a schematic flowchart of an embodiment of a model training method according to this application;
FIG. 6 is a schematic flowchart of another embodiment of a model training method according to this application;
FIG. 7 is a diagram of a wireless federated multi-task learning scenario according to this application;
FIG. 8a is a diagram of a structure of a positioning model according to this application;
FIG. 8b is a diagram of a structure of a channel compression model according to this application;
FIG. 8c is a diagram of a structure of an LOS/NLOS identification model according to this application;
FIG. 9 is a diagram of a structure of an embodiment of a server according to this application;
FIG. 10 is a diagram of a structure of an embodiment of a client device according to this application;
FIG. 11 is a diagram of a structure of another embodiment of a server according to this application; and
FIG. 12 is a diagram of a structure of another embodiment of a client device according to this application.

### DESCRIPTION OF EMBODIMENTS

This application provides a model training method, a server, and a client device, to manage a training progress of each model in federated multi-task learning, to obtain a more stable global shared model.

In this application, a term such as "example" or "for example" indicates giving an example, an illustration, or a description. In embodiments of this application, any embodiment or design solution described as "example" or "for example" should not be explained as being more preferred or having more advantages than another embodiment or design solution. To be precise, use of the word such as "example" or "for example" is intended to present a related concept in a specific manner.

A term "first" or "second" in embodiments of this application are merely intended for a purpose of description, and shall not be understood as an indication or implication of relative importance or an implicit indication of a quantity of indicated technical features. Therefore, a feature limited by "first" or "second" may explicitly or implicitly include one or more features. In the descriptions of this application, unless otherwise stated, "a plurality of" means two or more than two. A term "at least one" in this application means one or more, and the term "a plurality of" in this application means two or more than two.

It should be understood that the terms used in the descriptions of the various examples in this specification are merely intended to describe specific examples and are not intended to impose a limitation. Terms "one" ("a" and "an") and "the" of singular forms used in the descriptions of the various examples and the appended claims are also intended to include plural forms, unless otherwise specified in the context clearly.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application. It should be understood that determining B based on A does not mean that B is determined based only on A, and B may alternatively be determined based on A and/or other information. It should be further understood that a term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or their combinations not excluded. It should be further understood that a term "if" may be interpreted as a meaning of "when" ("when" or "upon"), "in response to determining", or "in response to detecting". Similarly, according to the context, a phrase "if determining" or "if detecting (a stated condition or event)" may be interpreted as a meaning of "when determining", "in response to determining", "when detecting (a stated condition or event)", or "in response to detecting (a stated condition or event)".

It should be understood that "one embodiment", "an embodiment", and "a possible implementation" mentioned throughout the specification mean that specific features, structures, or characteristics related to the embodiment or the implementation are included in at least one embodiment of this application. Therefore, "in one embodiment" or "in an embodiment" or "a possible implementation" appearing throughout the specification does not necessarily refer to a same embodiment. In addition, the specific features, structures, or characteristics may be combined in one or more embodiments in any proper manner.

The solutions provided in this application are applicable to a machine learning system. The machine learning system includes a server and at least one terminal-side device. In this application, an example in which the machine learning system is a federated learning system is used for description. To better understand the solutions provided in this application, the following describes related knowledge of federated learning.

The federated learning is a machine learning method used to protect user privacy. In some actual application scenarios in the field of machine learning, it is difficult to independently obtain a good machine learning model through training due to a limitation such as insufficient data features or a small quantity of samples on a single device. Therefore, data of a plurality of devices needs to be fused for training, to obtain a good-quality model. User data privacy further needs to be ensured while the data of the plurality of devices is fused for training. In other words, the data cannot be transmitted out of user's devices and can be used locally only for model training. The federated learning emerges accordingly. The federated learning can effectively help a plurality of computing nodes use data and perform machine learning modeling while meeting requirements such as user privacy protection and data security.

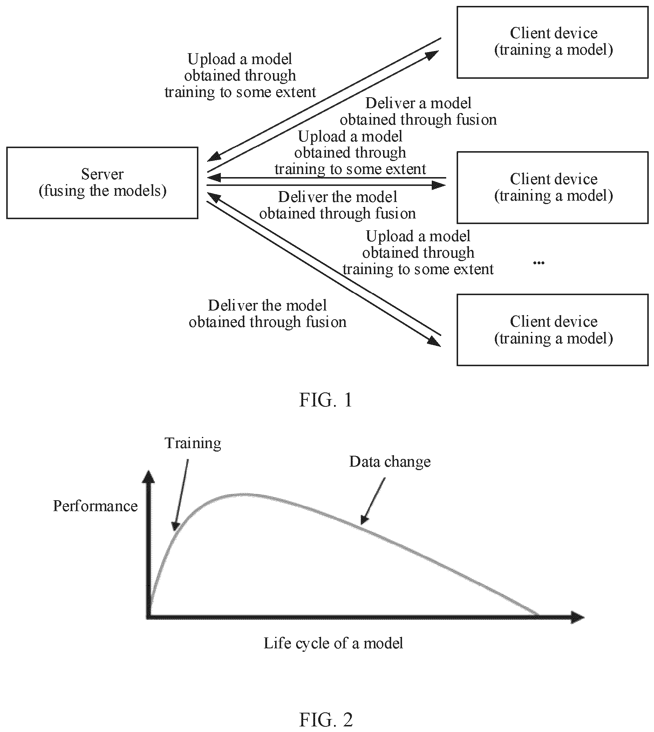

FIG. 1 is a diagram of an architecture of a federated learning system according to this application. Federated learning is a machine learning technology used for user privacy protection. A structure of the federated learning system generally includes one server and a plurality of client devices as participants. A working procedure mainly includes a model delivery process and a model fusion process. In the model delivery process, the client device downloads a model from the server, trains, by using locally stored training data, the model downloaded from the server, and uploads a model obtained through training to some extent to the server, where training to some extent may be understood as training for a fixed quantity of rounds. In the model fusion process, the server collects models uploaded by the client devices, fuses the models, and delivers a model obtained through fusion to the client devices. The server may fuse the plurality of models in a plurality of manners. For example, the server may perform averaging processing on the plurality of received models, and use, as a shared model, a result obtained by performing averaging processing on the plurality of models. For another example, the server performs weighting processing on the plurality of received models, and uses, as a shared model, a result obtained by performing weighting processing on the plurality of models. The model delivery process and the model fusion process are iterated repeatedly until the models are converged. It should be noted that, in some possible implementations, the server may be a cloud server or a cloud-side device. This is not limited in embodiments of this application. In a wireless federated learning scenario, the server may alternatively be a base station, an access point, a satellite, or the like. In this application, the client device sometimes is also referred to as a terminal-side device, and the client device and the terminal-side device have a same meaning. For example, the terminal-side device may be a terminal, such as a mobile phone terminal, a tablet computer, a notebook computer, an uncrewed aerial vehicle, an augmented reality (augmented reality, AR)/virtual reality (virtual reality, VR) device, a vehicle-mounted terminal, a device used for security protection (such as a surveillance camera device, a smoke alarm device, or a fire extinguishing device), a smart speaker, or a smart household appliance. In addition, it should be noted that the model in this application includes a neural network model. A specific type of the model is not limited in this application. For example, the model in this application may be a convolutional neural network model, a recurrent neural network model, a deep residual network model, or the like.

Multi-task learning (multi-task learning, MTL) is a machine learning method relative to single-task learning (single-task learning), and aims to improve generalization capabilities of a plurality of related tasks through joint learning of the plurality of related tasks. Specifically, the multi-task learning is a learning method for mutual promotion by using correlation among the plurality of tasks to learn the plurality of tasks in parallel. In other words, in the multi-task learning, the plurality of tasks may be trained simultaneously, so that the plurality of tasks affect each other. In general, a generalization capability of the multi-task learning is better than that of the single-task learning. The correlation among the plurality of tasks may also be understood as a common feature/shared feature among the plurality of tasks. In the multi-task learning, a model needs to be established for each task. Models for the plurality of tasks have sub-models whose structures are the same and that are used to train data of a same type. The common sub-models of the plurality of models may share a model parameter. In this application, the common sub-model of the plurality of models is referred to as a shared model, and each of the plurality of models includes the shared model. The shared model may be the entire or a part of a model.

A combination of federated learning and multi-task learning is federated multi-task learning. To be specific, the federated learning system trains a plurality of different but related tasks, and shared models in models for the plurality of tasks are fused by using a federated learning method. In the model fusion process, the server collects shared models uploaded by the client devices, and fuses the models to obtain a global shared model. After obtaining the global shared model, the server delivers the global shared model to each client device. The client device replaces a local shared model with the global shared model, and continues to perform model training or perform inference by using the model. The model delivery process and the model fusion process are iterated repeatedly until the shared models are converged.

Because data of the client device is continuously added and updated, model performance changes continuously, from high performance at the beginning of model establishment to low performance caused by increasing mismatch with current data distribution. To cope with performance deterioration, life cycle management (life cycle management, LCM) needs to be performed on the model. FIG. 2 is a diagram of a life cycle of a model according to this application. From the beginning of model establishment, training of the model starts, and performance is gradually improved. When the performance is improved to the greatest extent, it is considered that the model is converged, and the training stops. However, as data in the system changes (data distribution is inconsistent with data distribution used for training), the model increasingly mismatches the data, resulting in gradual deterioration of the performance. The life cycle of the model is monitored, so that a communication device can adjust the model performance in time. For example, when the performance is deteriorated to a threshold, training may restart by using current data.

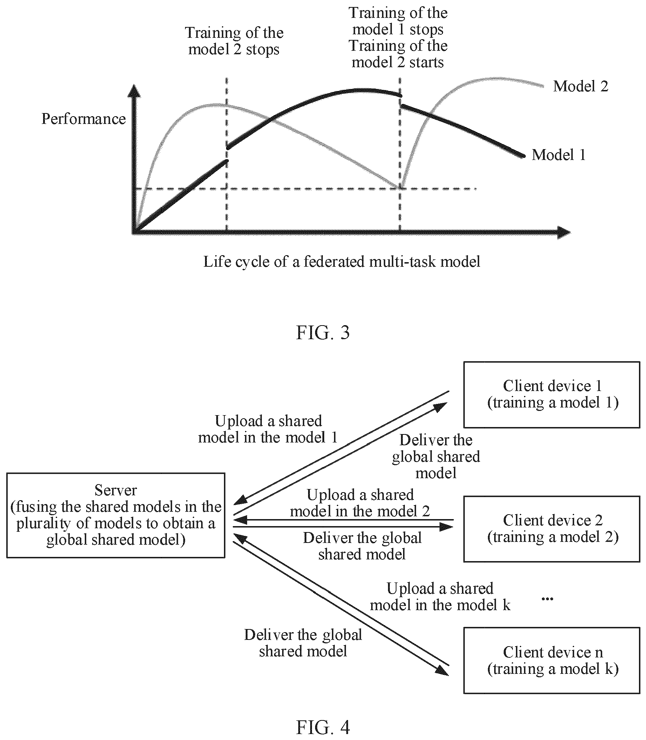

In a federated multi-task learning scenario, a plurality of clients upload weights of some or all models to a server based on local tasks. After completing model fusion, the server delivers a global model obtained through fusion to the clients, and the clients each replaces a part or all of a corresponding local model with the global model. It can be learned that different tasks usually have different training difficulty and training duration. In the federated multi-task learning scenario, model management of a single task affects another task. Therefore, joint life cycle management of a multi-task model needs to be performed. As shown in FIG. 3, because a training speed of a model 2 is higher, training of the model 2 first stops, and that training of the model 2 stops indicates that an updated model in the model 2 is no longer uploaded. In this case, because only a model in a model 1 is uploaded, the global model is closer to the model 1, and performance of the model 1 is improved sharply. As data distribution changes, performance of the model 2 is gradually deteriorated. After the performance of the model 2 is deteriorated to a preset threshold, training of the model 2 restarts. In this case, training of the model 1 is completed, and the training stops. Because the global model is closer to the model 2, performance of the model 1 is deteriorated.

FIG. 4 is a diagram of an architecture of a model training system according to this application. The model training system provided in this application includes a server and at least two terminal-side devices. The model training system is specifically, for example, a federated multi-task learning system. One client device may train a model for at least one task, and a model for one task may be trained on at least one client device. A quantity of tasks and a quantity of terminals in the figure are merely an example, and should not be construed as a limitation on this application.

The server may be connected to a plurality of client devices in a wired or wireless manner. The plurality of client devices train models for a plurality of related tasks, that is, the plurality of client devices jointly train a plurality of models. The plurality of models jointly include a shared model. The client devices are configured to train the local models, and report shared models to the server, so that the server fuses the shared models in the plurality of models. The server is configured to fuse the shared models from the client devices to obtain a global shared model, and deliver the global shared model to the client devices. After obtaining the global shared model, the client devices replace the local shared models with the global shared model.

In addition, in embodiments, the server is further configured to deliver, to the client devices, second indication information indicating to measure the models locally trained by the client devices, so that the client devices measure the models to obtain model measurement information. The server determines, based on the model measurement information that is reported by the client devices and that is of the plurality of models, first indication information corresponding to each model, where the first indication information indicates a training strategy for a client device to train the model. The training strategy includes, for example, stopping training, restarting training, or continuing training, to perform joint life cycle management on the plurality of models. To be specific, the server controls a global training status of the plurality of models. Whether to stop, restart, or continue training of each model is determined based on a training status of another model instead of considering a training status of only the model. In this way, the server can coordinate life cycles of the plurality of models as much as possible, and reduce instability of performance of the shared model and impact on performance of another model that are caused by the following: Because the life cycles of the models are different, training of a part of the models stops and shared models in the part of the models are not uploaded after convergence, consequently, performance of the global shared model is closer to performance of an incompletely converged model that continues to be trained and whose shared model continues to be uploaded, and further, the performance of the global shared model changes to being closer to performance of different models.

In embodiments, the model measurement information is obtained by measuring the plurality of models, and the server manages the life cycles of the plurality of models based on the model measurement information of the plurality of models, and guides the training strategy for each client device, so that the performance of the global shared model obtained through fusion is more balanced and stable.

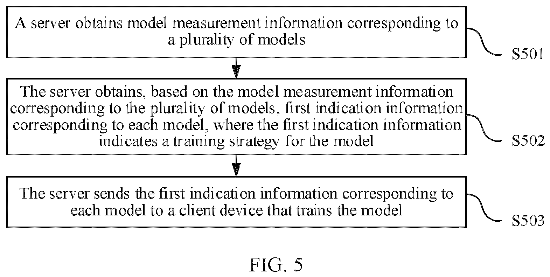

FIG. 5 is a schematic flowchart of an embodiment of a model training method according to this application. This embodiment is performed by the server in the foregoing model training system. This embodiment includes the following steps.

S501: The server obtains model measurement information corresponding to a plurality of models.

The plurality of models are models corresponding to a plurality of related tasks, the plurality of models are models locally trained by a plurality of client devices, and the model measurement information is sent to the server after the plurality of client devices measure the locally trained models.

The measurement information of the plurality of models may be simultaneously uploaded by the plurality of client devices to the server. Alternatively, the measurement information of the plurality of models may be uploaded to the server at different time. The server may obtain latest model measurement information of models in a time window. If one model is trained on the plurality of client devices, the plurality of client devices each report model measurement information of the model to the server. In this case, the server may calculate an average value, a median value, or the like of the model measurement information reported by the plurality of client devices of the model as model measurement information of the model.

The client device measures an entire model, and the model measurement information reflects a training status or a training phase of the entire model. Because the training status/training phase of the model is related to model performance, it may also be considered that the model measurement information reflects a performance status of the entire model. The model measurement information includes, for example, at least one of measurement indicators such as a model performance improvement amount, a model loss value, precision, communication overheads, a latency, and energy efficiency. The model performance improvement amount indicates whether the model performance is improving or deteriorating, and a change degree of the improvement or deterioration. When a value of the model performance improvement amount is a positive value, a larger value of the model performance improvement amount indicates faster improvement of the model performance, which indicates that the model is not converged. The value of the model performance improvement amount may be a negative value, indicating that the model performance is deteriorating. In this case, a smaller value of the model performance improvement amount indicates faster deterioration of the model performance. The model performance improvement amount may be obtained through comprehensive calculation based on at least one of the model loss value, the precision, the communication overheads, the latency, and the energy efficiency. For example, the model performance improvement amount may be obtained through weighted summation of at least one of the model loss value, the precision, the communication overheads, the latency, and the energy efficiency. It is clear that the model performance improvement amount may alternatively be calculated in another manner.

The model performance improvement amount may be calculated by the client device and sent to the server. Alternatively, the model performance improvement amount may be calculated by the server after the client device sends at least one of the measurement indicators such as the model loss value, the precision, the communication overheads, the latency, and the energy efficiency to the server.

S502: The server obtains, based on the model measurement information corresponding to the plurality of models, first indication information corresponding to each model, where the first indication information indicates a training strategy for the model.

The server determines, based on the model measurement information of the plurality of models, the first indication information corresponding to each model. The first indication information indicates the training strategy for the model. The training strategy includes, for example, stopping training, restarting training, increasing a training speed, or decreasing a training speed. The training strategy may further include at least one of model freezing, model invalidation, model selection, model sharing, model fine-tuning, sub-model configuration, model architecture reconfiguration, model resetting, model combination, model compression, model decompression, model update, model segmentation, and the like.

A process from starting training of a model to stopping the training when model convergence meets a convergence requirement, and then to restarting training of the model when model performance is deteriorated to a restart requirement may be referred to as a life cycle of the model. A change trend of the model performance varies with a phase in the life cycle of the model. For example, at the beginning of the training of the model, the model performance is improved fast. After the model is trained for a period of time, the model starts to be converged, and the model performance is improved slowly. When the training stops when the model convergence meets the convergence requirement, the model performance is optimal and a shared model is not uploaded to the server during a period in which the training stops. As data distribution changes and a global shared model is more different from the model after the training stops, the model performance is deteriorated. Different models may have different life cycles.

The server determines a current training progress of each model based on the measurement information of the plurality of models, namely, a specific phase in the life cycle of each model. A terminal corresponding to a model whose model training speed is fast and convergence is earlier than that of another model may be indicated to decrease the training speed, to prolong a training cycle, so that a training progress of the model and a training progress of the another model are kept consistent as much as possible. A terminal corresponding to a model whose training speed is slow and convergence is later than that of another model may be indicated to increase the training speed, to shorten a training cycle, so that a training progress of the model catches up with the another model as much as possible. Therefore, the server may indicate the training strategy to the client device, so that life cycles of the models are kept consistent as much as possible, or a difference between life cycles of the models is within an acceptable range. This can reduce instability of performance of the global shared model caused because the global shared model is continuously closer to different models due to inconsistent life cycles of the models.

The server may specifically determine a training progress of each model based on the model performance improvement amount of each model. Training progresses of the plurality of models are further compared, to determine the first indication information of each model.

In an implementation, the training progress of each model may be determined based on a change trend of latest M model performance improvement amounts of each model. For example, for a model whose latest M model performance improvement amounts decrease as a whole, it may be considered that the model has been converged. M is an integer greater than or equal to 2. However, for a model whose latest M model performance improvement amounts do not decrease significantly as a whole, it may be considered that the model is not converged. The server compares the training progresses of the models. If some models are being converged, and some models are not converged, the server may send, to a client device corresponding to a model that is being converged, first indication information indicating to decrease a training speed, and send, to a client device corresponding to a model that is not converged, first indication information indicating to increase a training speed.

In another implementation, the server may determine, based on the model measurement information corresponding to the plurality of models, a weight corresponding to each model. Further, the server determines, based on the weight corresponding to each model, the first indication information corresponding to each model. In this embodiment, the weight may be correlated with the model performance improvement amount. Specifically, the weight may be positively correlated with the model performance improvement amount.

The server calculates a ratio of an absolute value of the performance improvement amount of each model to a sum of absolute values of model performance improvement amounts of all the models, to obtain the weight of each model. For example, if a model performance improvement amount of a model A is 0.4, a model performance improvement amount of a model B is 0.6, and a model performance improvement amount of a model C is 1, a weight of the model A is 0.2, a weight of the model B is 0.3, and a weight of the model C is 0.5. It is clear that the weight may alternatively be obtained by using another normalization method. This is not limited herein.

The weight may indicate a training progress of each model compared with that of another model. If a weight of a model is significantly greater than that of another model, the model is not converged. The training progress of each model may be further determined with reference to historical weight data. For example, if weights of a model obtained based on latest M pieces of model measurement information increase as a whole, and weights of another model decrease as a whole, it may indicate that the model whose weights increase is still not converged, and the model whose weights decrease has started to be converged.

Alternatively, the training progress of each model may be determined with reference to a historical model performance improvement amount. For example, for a model whose weights obtained based on latest M pieces of model measurement information decrease as a whole and whose model performance improvement amounts also decrease as a whole, it may be considered that the model is being converged, and the server may send, to a client device corresponding to the model, first indication information indicating to decrease a training speed. For a model whose weights obtained based on latest M pieces of model measurement information increase as a whole and whose model performance improvement amounts also increase or not significantly decrease as a whole, it may be considered that the model is not converged, and the server may send, to a client device corresponding to the model, first indication information indicating to increase a training speed.

In this embodiment, the first indication information may include the foregoing weight, and indicates, by using the weight, the training strategy to be executed by the client device on the model. It is clear that the first indication information may alternatively be in another form, for example, different character strings indicate different training strategies.

The first indication information may further indicate the shared model to upload a model upload parameter to the server. For example, the model upload parameter includes an upload periodicity of the model. When the first indication information indicates to decrease the training speed, the first indication information may further indicate to reduce the upload periodicity of the model. The model upload parameter further includes, for example, a model upload compression rate, and the first indication information carries the model upload compression rate.

S503: The server sends the first indication information corresponding to each model to a client device that trains the model.

After obtaining the first indication information corresponding to each model, the server sends the first indication information corresponding to each model to the client device that trains the model, to dynamically adjust the life cycle of each model, so that the life cycles of the models are kept consistent as much as possible. In this way, shared models in more models can be fused during fusion for the global shared model, and the performance of the global shared model is more stable.

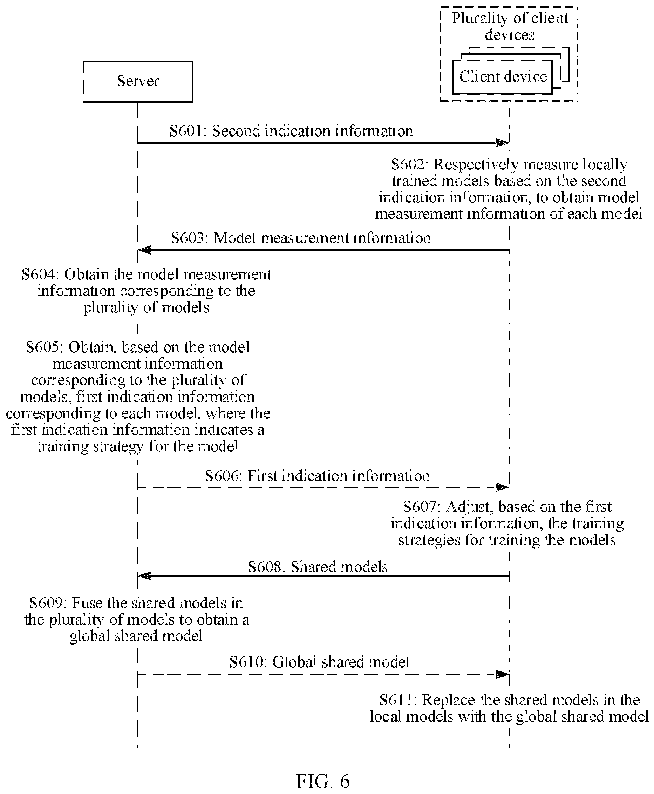

FIG. 6 is a schematic flowchart of another embodiment of a model training method according to this application. This embodiment is implemented by the foregoing model training system. This embodiment includes the following steps.

S601: A server sends second indication information to a plurality of client devices.

The server separately sends the second indication information to the plurality of client devices, to indicate the plurality of clients to measure models for locally trained tasks and report measurement information. The plurality of client devices are client devices participating in federated multi-task learning, and each client device trains a model for at least one task.

The second indication information includes at least one of an identifier of a model trained by a corresponding client device, a model measurement periodicity, a model measurement information reporting condition, a model measurement information reporting periodicity, and a measurement indicator. Model measurement periodicities, model measurement information reporting conditions, model measurement information reporting periodicities, or measurement indicators of different models may be the same or different.

The server may periodically send the second indication information to the client device, to periodically obtain the model measurement information reported by the client device. The server may alternatively send the second indication information once, where the second indication information carries parameters such as the model measurement periodicity, the model measurement information reporting condition, or the model measurement information reporting periodicity, so that the client device reports, based on the parameter in the second indication information, the model measurement information to the server periodically or reports the model measurement information to the server when the reporting condition is met.

S602: The plurality of client devices respectively measure the locally trained models based on the second indication information, to obtain model measurement information of each model.

After receiving the second indication information from the server, the plurality of client devices respectively measure the locally trained models based on the second indication information, to obtain the model measurement information of each model.

The second indication information includes, for example, the measurement indicator. The client device measures the model based on the measurement indicator in the second indication information. The measurement indicator includes, for example, at least one of a model loss value, precision, communication overheads, a latency, energy efficiency, and the like. Therefore, the model measurement information may include at least one of measurement values such as the model loss value, the precision, the communication overheads, the latency, and the energy efficiency. The client device may send, to the server, the model measurement information including at least one of the measurement values such as the model loss value, the precision, the communication overheads, the latency, and the energy efficiency.

In another implementation, the client device may obtain a model performance improvement amount through calculation based on at least one of the measurement values such as the model loss value, the precision, the communication overheads, the latency, and the energy efficiency, and send the model performance improvement amount as the model measurement information to the server. Alternatively, the client device sends a model performance improvement amount and at least one of the measurement values such as the model loss value, the precision, the communication overheads, the latency, and the energy efficiency as the model measurement information to the server.

S603: The plurality of client devices send the model measurement information to the server.

If the second indication information carries the model measurement information reporting periodicity, the client device sends the model measurement information to the server based on the model measurement information reporting periodicity indicated in the second indication information. If the second indication information carries the model measurement information reporting condition, the client device sends the model measurement information to the server when the model measurement information reporting condition is met. The model measurement information reporting condition includes, for example, that the model has completed convergence, model performance is deteriorated to a specified threshold, or computing load of the client device is excessively high.

S604: The server obtains the model measurement information corresponding to the plurality of models.

For this step, refer to the related content of S501. Therefore, details are not described herein again.

S605: The server obtains, based on the model measurement information corresponding to the plurality of models, first indication information corresponding to each model, where the first indication information indicates a training strategy for the model.

For this step, refer to the related content of S502. Therefore, details are not described herein again.

S606: The server sends the first indication information corresponding to each model to a client device that trains the model.

For this step, refer to the related content of S503. Therefore, details are not described herein again.

S607: The plurality of client devices adjust, based on first indication information, the training strategies for training the models.

After receiving the first indication information from the server, the plurality of clients determine, based on the first indication information, the training strategies for the locally trained models, and execute the corresponding training strategies. The training strategy includes, for example, stopping training, restarting training, increasing a training speed, or decreasing a training speed. The training strategy may further include at least one of model freezing, model invalidation, model selection, model sharing, model fine-tuning, sub-model configuration, model architecture reconfiguration, model resetting, model combination, model compression, model decompression, model update, model segmentation, and the like.

When the first indication information includes a weight of the model trained by the client device, the client device may determine, based on the weight, a training strategy corresponding to the model trained by the client device. For example, when the weight is greater than a first threshold, the training speed may be increased. When the weight is less than or equal to the first threshold and greater than a second threshold, the training speed may be decreased. When the weight is less than or equal to the second threshold, the training may stop. When the local model of the client device is in a training stop state, if the weight received by the client device is any non-zero value, it may be considered that it indicates to restart training.

If the first indication information received by the client device indicates to stop training, the client device stops training of the local model, and no longer sends a local shared model to the server before training restarts.

If the first indication information received by the client device indicates to restart training, the client device restarts training of the local model, and resends a locally trained shared model to the server.

If the first indication information received by the client device indicates to increase a training speed, the client device may increase the training speed in a manner such as increasing a learning rate or increasing a quantity of samples processed in each batch (batch size).

If the first indication information received by the client device indicates to decrease a training speed, the client device may decrease the training speed in a manner such as reducing model precision, reducing a learning rate, or reducing a local training round. In another implementation, the client device may further decrease the training speed by increasing an upload periodicity of the locally trained shared model. Specifically, after the client device increases the upload periodicity of the shared model, when the client device does not send a shared model to the server, a global shared model obtained by the server through fusion does not have the shared model from the client device, in other words, the shared model of the client device does not contribute to the global shared model. In this case, after receiving the global shared model, the client device replaces the local shared model with the global shared model. Because the replaced shared model of the client device does not participate in fusion for the global shared model, performance of the local model of the client device may be deteriorated to some extent after the shared model is replaced with the global shared model, so that a convergence speed of the model is slowed down, and a life cycle of the local model of the client device is prolonged. However, the client device still sends the shared model to the server. When the client device sends the shared model to the server, the shared model is still fused into the global shared model. Therefore, performance of the model trained by the client device is not continuously deteriorated, and the performance can be maintained in a stable state as a whole during a period in which the training speed is decreased.

S608: The plurality of client devices send shared models to the server.

Client devices other than the client device that stops model training send shared models to the server based on upload periodicities of the shared models of the client devices, so that the server fuses the shared models of the client devices to obtain the global model. The client devices may simultaneously send the shared models to the server, or may send the shared models to the server at different moments. This is not limited herein.

S609: The server fuses the shared models in the plurality of models, to obtain the global shared model.

In an implementation, the server may perform averaging processing on the plurality of received shared models, and use a result obtained by performing averaging processing on the plurality of shared models as the global shared model.

In another implementation, the server performs weighting processing on the plurality of received shared models based on weights, and uses a result obtained by performing weighting processing on the plurality of shared models as the global shared model. The weight may be a weight obtained based on the model measurement information of each model. For example, the weight is a weight obtained based on the model performance improvement amount of each model in S605. A model whose weight is high and that is not converged makes a greater contribution to the global shared model. When a client device corresponding to the model whose weight is high and that is not converged continues training based on the global shared model, because a matching degree between the model and local training data is high, model convergence can be accelerated, a training speed of the model is increased, and the model training cycle is shortened. A model whose weight is low and that has started to be converged makes a small contribution to the global shared model. When a client device corresponding to the model whose weight is low and that has started to be converged continues training based on the global shared model, because a matching degree between the model and the local training data is low, model convergence can be slowed down, a training speed of the model is decreased, and the model training cycle is prolonged. However, in the global shared model, there is still a shared model contributed by the model whose weight is low and that has start to be converged, so that the global shared model does not excessively deviate from the model whose weight is low and that has started to be converged. Instead, the training speed is decreased in a case in which stability of the model whose weight is low and that has started to be converged is ensured, so that performance of the global shared model and performance of the model locally trained by the client devices are controllable.

S610: The server sends the global shared model to each client device.

After obtaining the global shared model, the server sends the global shared model to each client device, so that the client device replaces the local shared model with the global shared model, and continues training or inference based on the model obtained through replacement.

S611: The plurality of client devices replace the shared models in the local models with the global shared model.

After receiving the global shared model from the server, each client device updates the shared model in the locally trained model to the global shared model, and performs training or inference based on the updated model.

In this embodiment, the server sends, to the plurality of client devices participating in the federated multi-task learning, the second indication information indicates model measurement, and each client device measures, based on the second indication information, the model trained by the client device, and reports, to the server, the model measurement information obtained through measurement. The server determines a current training progress of each model based on the model measurement information of each model, to determine the training strategy for the corresponding model based on the training progress of each model, to manage life cycles of the plurality of models, so that the life cycles of the models are kept consistent as much as possible. Therefore, performance of the global shared model obtained by the server by fusing the shared models in the models is more stable.

To make the technical solutions provided in this application easier to understand, the following uses a wireless federated multi-task learning scenario as an example for description.

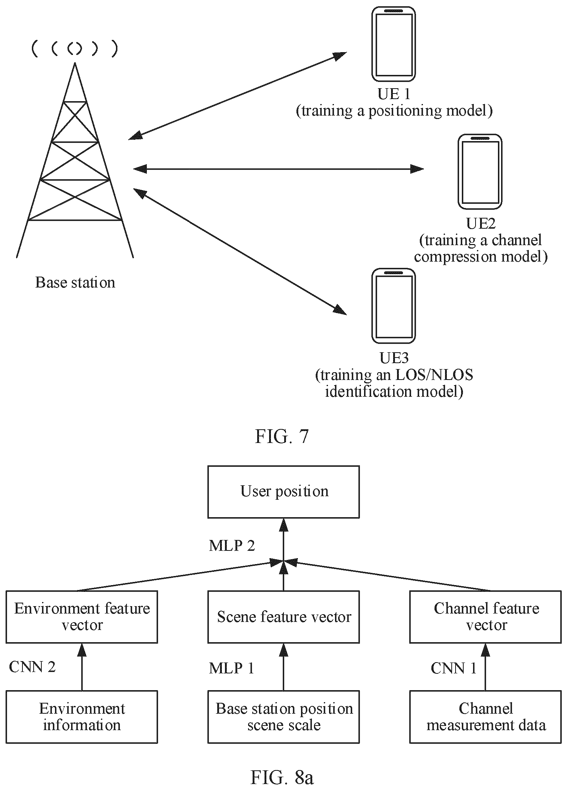

FIG. 7 is a diagram of a wireless federated multi-task learning scenario according to this application. In FIG. 7, an example in which three user equipments (user equipments, UEs) respectively train models for three tasks: channel compression, positioning, and line-of-sight (line-of-sight, LOS)/non-line-of-sight (non-line-of-sight, NLOS) identification is used. A UE 1 trains a positioning model, a UE 2 trains a channel compression model, and a UE 3 trains an LOS/NLOS identification model. A base station serves as a server to manage life cycles of the three models trained by the UE 1 to the UE 3, and fuses shared models in the three models trained by the UE 1 to the UE 3, to obtain a global shared model, and deliver the global shared model to each UE.

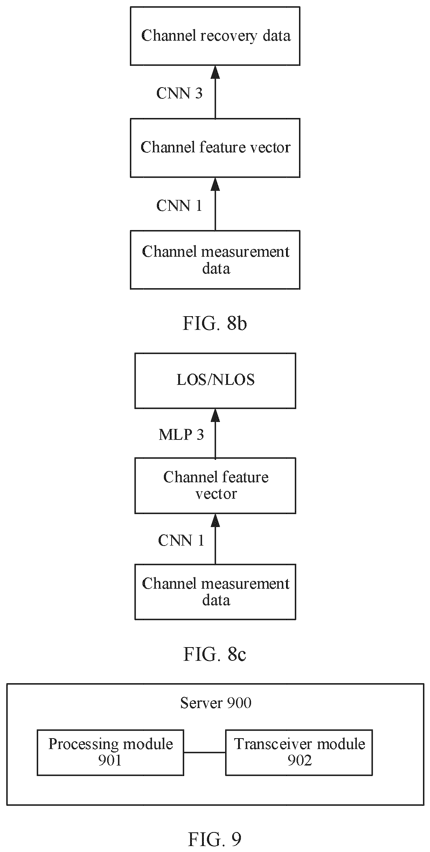

FIG. 8a is a diagram of a structure of a positioning model according to this application; FIG. 8b is a diagram of a structure of a channel compression model according to this application; and FIG. 8c is a diagram of a structure of an LOS/NLOS identification model according to this application. The positioning model includes a convolutional neural network (convolutional neural network, CNN) 1, a CNN 2, and a multi-layer perceptron (multi-layer perceptron, MLP). The channel compression model includes the CNN 1. The LOS/NLOS identification model includes the CNN 1. It can be learned that training cycles of the three models vary with complexity degrees of the three models. The CNN 1 networks of the three models have a same structure and are all used to process channel data. Channel features may be used for all of the three tasks. Therefore, the network can be shared, in other words, the CNN 1 is a shared model. Parameters of the CNN 1 may be fused on the base station to obtain a global shared model, and the global shared model is delivered to the three UEs.

The base station may include first indication information or second indication information in an information element (information element, IE) in a radio resource control (radio resource control, RRC) message.

The base station separately sends, to the UE 1 to the UE 3, the RRC message that carries the second indication information. The second indication information includes, for example, at least one of a model identifier of a specified model that needs to be measured, time at which model measurement is performed, a specified test data set, a measurement indicator, a model measurement information reporting periodicity or condition, and the like. After obtaining the second indication information, the UE 1 measures the positioning model based on the second indication information; after obtaining the second indication information, the UE 2 measures the channel compression model based on the second indication information; and after obtaining the second indication information, the UE 3 measures the LOS/NLOS identification model based on the second indication information. After completing model measurement, the UE 1 to the UE 3 send their respective model measurement information to the base station based on the reporting periodicities or conditions indicated in the second indication information.

After receiving the model measurement information of the positioning model reported by the UE 1, the model measurement information of the channel compression model reported by the UE 2, and the model measurement information of the LOS/NLOS identification model reported by the UE 3, the base station determines training progresses of the three models based on the model measurement information. If training progresses of the channel compression model and the LOS/NLOS identification model are faster than the training progress of the positioning model, the base station may send, to the UE 2, first indication information indicating the UE 2 to decrease a training speed of the channel compression model, send, to the UE 3, first indication information indicating the UE 3 to decrease a training speed of the LOS/NLOS identification model, and send, to the UE 1, first indication information indicating the UE 1 to increase a training speed of the positioning model, so that the life cycles of the three models are as close as possible.

The base station further determines weights of the shared models in the three models based on the model measurement information of the three models. After receiving the CNNs 1 uploaded by the UE 1 to the UE 3, the base station fuses a global CNN 1 based on the weights corresponding to the CNNs 1. After obtaining the global CNN 1, the base station separately sends the global CNN 1 to the UE 1 to the UE 3. The UE 1 replaces the CNN 1 in the positioning model with the global CNN 1, the UE 2 replaces the CNN 1 in the channel compression model with the global CNN 1, and the UE 3 replaces the CNN 1 in the LOS/NLOS identification model with the global CNN 1, and continues training or inference after completing the replacement.

As shown in FIG. 9, based on a same technical concept, this application further provides a server 900. The server 900 includes a processing module 901 and a transceiver module 902. The processing module 901 is configured to obtain model measurement information corresponding to a plurality of models, where the plurality of models are models corresponding to a plurality of related tasks, the plurality of models are models locally trained by a plurality of client devices, and the model measurement information is sent to the server after the plurality of client devices measure the locally trained models. The processing module 901 is configured to obtain, based on the model measurement information corresponding to the plurality of models, first indication information corresponding to each model, where the first indication information indicates a training strategy for the model. The transceiver module 902 is configured to send the first indication information corresponding to each model to a client device that trains the model.

In a possible implementation, the processing module 901 is configured to obtain, based on the model measurement information corresponding to the plurality of models, a model performance improvement amount corresponding to each model. The processing module 901 determines, based on the model performance improvement amount corresponding to each model, the first indication information corresponding to each model.

In a possible implementation, the training strategy includes stopping training, restarting training, increasing a training speed, or decreasing a training speed.

In a possible implementation, each model includes a shared model, the shared model is a same model in the plurality of models, and the first indication information further indicates the shared model to upload a model upload parameter of the server. The model upload parameter may include an upload periodicity of the shared model, a model upload compression rate, and the like.

In a possible implementation, the model measurement information includes at least one of the model performance improvement amount, a model loss value, precision, communication overheads, a latency, and energy efficiency.

In a possible implementation, the transceiver module is configured to send second indication information to the plurality of client devices, where the second indication information indicates the plurality of client devices to measure the locally trained models, to obtain the model measurement information.

In a possible implementation, the second indication information includes at least one of an identifier of the model, a model measurement periodicity, a model measurement information reporting condition, a model measurement information reporting periodicity, and a measurement indicator.

In a possible implementation, each model includes the shared model, the shared model is the same model in the plurality of models, and the transceiver module 902 is configured to receive shared models that correspond to the plurality of models and that are uploaded by the plurality of client devices. The processing module 901 is configured to fuse, based on a weight corresponding to each model, the shared models corresponding to the plurality of models, to obtain a global shared model, where the weight corresponding to each model is obtained based on the model measurement information corresponding to the plurality of models. The transceiver module 902 is configured to send the global shared model to the plurality of client devices.

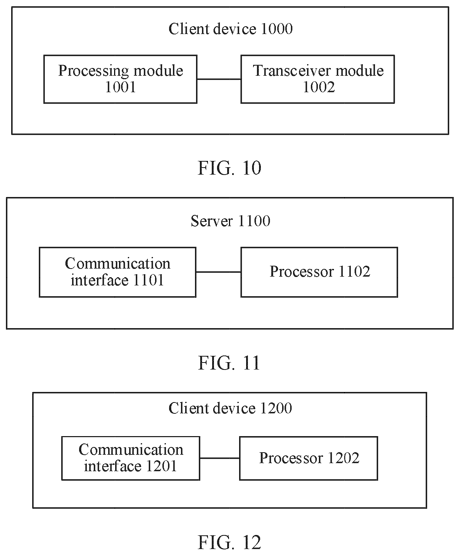

FIG. 10 is a diagram of a structure of an embodiment of a client device according to this application. The client device 1000 includes a processing module 1001. The processing module 1001 is configured to obtain first indication information from a server, where the first indication information is obtained based on model measurement information corresponding to a plurality of models, the plurality of models are models corresponding to a plurality of associated tasks, the plurality of models include a model locally trained by the client device, and the model measurement information is sent to the server after the plurality of client devices measure the locally trained models. The processing module 1001 is configured to adjust, based on the first indication information, a training strategy for the client device to train the model.

In a possible implementation, the training strategy includes stopping training, restarting training, increasing a training speed, or decreasing a training speed.

In a possible implementation, each model includes a shared model, the shared model is a same model in the plurality of models, and the first indication information further indicates the shared model to upload a model upload parameter of the server.

In a possible implementation, the model measurement information includes at least one of a model performance improvement amount, a model loss value, precision, communication overheads, a latency, and energy efficiency.

In a possible implementation, the client device further includes a transceiver module 1002. The processing module 1001 is configured to obtain second indication information from the server. The client device measures, based on the second indication information, the model trained by the client device, to obtain model measurement information. The transceiver module 1002 is configured to send the model measurement information to the server.

In a possible implementation, the second indication information includes at least one of an identifier of the model, a model measurement periodicity, a model measurement information reporting condition, a model measurement information reporting periodicity, and a measurement indicator.

FIG. 11 is a diagram of a structure of another embodiment of a server according to this application. The server 1100 includes a communication interface 1101 and a processor 1102. The communication interface 1101 is configured to communicate with a plurality of client devices. An operation performed by the server in any one of the foregoing model training method embodiments is implemented based on the communication interface 1101 and the processor 1102.

FIG. 12 is a diagram of a structure of another embodiment of a client device according to this application. The client device 1200 includes a communication interface 1201 and a processor 1202. The communication interface 1201 is configured to communicate with a server. An operation performed by the client device in any one of the foregoing model training method embodiments is implemented based on the communication interface 1201 and the processor 1202.

This application further provides a computer-readable storage medium. The computer-readable storage medium stores a computer program. When the computer program is executed by a computer, a procedure implemented by a server or a client device in any one of the foregoing model training method embodiments is implemented.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. There may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, all or some of the technical solutions of this application may be implemented in a form of a software product. The computer software product is stored in a storage medium, and includes several instructions for enabling a computer device (which may be a personal computer, a server, a network device, or the like) to perform all or some of the steps of the methods in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A model training method, wherein the method comprises:
obtaining, by a server, model measurement information corresponding to a plurality of models, wherein the plurality of models are models corresponding to a plurality of related tasks, the plurality of models are models locally trained by a plurality of client devices, and the model measurement information is sent to the server after the plurality of client devices measure the locally trained models;
obtaining, by the server based on the model measurement information corresponding to the plurality of models, first indication information corresponding to each model, wherein the first indication information indicates a training strategy for the model; and
sending, by the server, the first indication information corresponding to each model to a client device that trains the model.

2. The method according to claim 1, wherein the obtaining, by the server based on the model measurement information corresponding to the plurality of models, first indication information corresponding to each model comprises:
obtaining, by the server based on the model measurement information corresponding to the plurality of models, a model performance improvement amount corresponding to each model; and
determining, by the server based on the model performance improvement amount corresponding to each model, the first indication information corresponding to each model.

3. The method according to claim 1 or 2, wherein the training strategy comprises stopping training, restarting training, increasing a training speed, or decreasing a training speed.

4. The method according to any one of claims 1 to 3, wherein each model comprises a shared model, the shared model is a same model in the plurality of models, and the first indication information further indicates the shared model to upload a model upload parameter of the server.

5. The method according to any one of claims 1 to 4, wherein the model measurement information comprises at least one of a model performance improvement amount, a model loss value, precision, communication overheads, a latency, and energy efficiency.

6. The method according to any one of claims 1 to 5, wherein the method further comprises:
sending, by the server, second indication information to the plurality of client devices, wherein the second indication information indicates the plurality of client devices to measure the locally trained models, to obtain the model measurement information.

7. The method according to claim 6, wherein the second indication information comprises at least one of an identifier of the model, a model measurement periodicity, a model measurement information reporting condition, a model measurement information reporting periodicity, and a measurement indicator.

8. The method according to any one of claims 1 to 7, wherein each model comprises the shared model, the shared model is the same model in the plurality of models, and the method further comprises:
receiving, by the server, the shared models that correspond to the plurality of models and that are uploaded by the plurality of client devices;
fusing, by the server based on a weight corresponding to each model, the shared models corresponding to the plurality of models, to obtain a global shared model, wherein the weight corresponding to each model is obtained based on the model measurement information corresponding to the plurality of models; and
sending, by the server, the global shared model to the plurality of client devices.

9. A model training method, wherein the method comprises:
obtaining, by a client device, first indication information from a server, wherein the first indication information is obtained based on model measurement information corresponding to a plurality of models, the plurality of models are models corresponding to a plurality of associated tasks, the plurality of models comprise a model locally trained by the client device, and the model measurement information is sent to the server after the plurality of client devices measure the locally trained models; and
adjusting, by the client device based on the first indication information, a training strategy for the client device to train the model.

10. The method according to claim 9, wherein the training strategy comprises stopping training, restarting training, increasing a training speed, or decreasing a training speed.

11. The method according to claim 9 or 10, wherein each model comprises a shared model, the shared model is a same model in the plurality of models, and the first indication information further indicates the shared model to upload a model upload parameter of the server.

12. The method according to any one of claims 9 to 11, wherein the model measurement information comprises at least one of a model performance improvement amount, a model loss value, precision, communication overheads, a latency, and energy efficiency.

13. The method according to any one of claims 9 to 12, wherein the method further comprises:
obtaining, by the client device, second indication information from the server;
measuring, by the client device based on the second indication information, the model trained by the client device, to obtain the model measurement information; and
sending, by the client device, the model measurement information to the server.

14. The method according to claim 13, wherein the second indication information comprises at least one of an identifier of the model, a model measurement periodicity, a model measurement information reporting condition, a model measurement information reporting periodicity, and a measurement indicator.

15. A server, wherein the server comprises a processing module and a transceiver module, wherein
the processing module is configured to obtain model measurement information corresponding to a plurality of models, wherein the plurality of models are models corresponding to a plurality of related tasks, the plurality of models are models locally trained by a plurality of client devices, and the model measurement information is sent to the server after the plurality of client devices measure the locally trained models;
the processing module is configured to obtain, based on the model measurement information corresponding to the plurality of models, first indication information corresponding to each model, wherein the first indication information indicates a training strategy for the model; and
the transceiver module is configured to send the first indication information corresponding to each model to a client device that trains the model.

16. A client device, wherein the client device comprises a processing module, wherein
the processing module is configured to obtain first indication information from a server, wherein the first indication information is obtained based on model measurement information corresponding to a plurality of models, the plurality of models are models corresponding to a plurality of associated tasks, the plurality of models comprise a model locally trained by the client device, and the model measurement information is sent to the server after the plurality of client devices measure the locally trained models; and
the processing module is configured to adjust, based on the first indication information, a training strategy for the client device to train the model.

17. A model training system, wherein the system comprises a server and a plurality of client devices, the plurality of client devices train models corresponding to a plurality of related tasks, and the plurality of models are models locally trained by the plurality of client devices;
the plurality of client devices are respectively configured to send model measurement information of the locally trained models to the server;
the server is configured to obtain, based on the model measurement information corresponding to the plurality of models, first indication information corresponding to each model, wherein the first indication information indicates a training strategy for the model;
the server is configured to send the first indication information corresponding to each model to a client device that trains the model; and
the plurality of client devices are respectively configured to adjust, based on the first indication information, the training strategies for the client devices to train the models.

18. A server, wherein the server comprises a processor and a communication interface, the communication interface is configured to communicate with a plurality of client devices, and the model training method according to any one of claims 1 to 8 is implemented based on the processor and the communication interface.

19. A client device, wherein the client device comprises a processor and a communication interface, the communication interface is configured to communicate with a server, and the model training method according to any one of claims 9 to 14 is implemented based on the processor and the communication interface.

20. A computer-readable storage medium, comprising instructions, wherein when the computer-readable storage medium is run on a computer, the computer is enabled to perform the model training method according to any one of claims 1 to 8 or claims 9 to 14.
